# EUROPÄISCHE PATENTSCHRIFT

(11) **EP 3 452 201 B1**
(45) Veröffentlichungstag und Bekanntmachung des Hinweises auf die Patenterteilung: **26.02.2020**
(21) Anmeldenummer: 17709072.7
(22) Anmeldetag: 07.03.2017
(51) Int. Cl.: B01D 46/24

(54) **FILTEREINRICHTUNG, INSBESONDERE GASFILTER**
FILTER DEVICE, IN PARTICULAR GAS FILTER
DISPOSITIF DE FILTRATION, EN PARTICULIER FILTRE À GAZ

(30) Priorität: 03.05.2016 DE 102016005354
(43) Veröffentlichungstag der Anmeldung: 13.03.2019
(73) Patentinhaber: Mann + Hummel GmbH, 71636 Ludwigsburg (DE)
(72) Erfinder: DONAUER, Nadine, 70736 Fellbach (DE); PEREIRA MADEIRA, Pedro Miguel, 74321 Bietigheim-Bissingen (DE)
(74) Vertreter: Seyboth, Matthias
(86) Internationale Anmeldenummer: PCT/EP2017/055266
(87) Internationale Veröffentlichungsnummer: WO 2017/190872

(56) Entgegenhaltungen:
- EP-A1- 2 764 905
- DE-A1-102009 008 450
- JP-A- 2003 336 552

## Beschreibung

### Technisches Gebiet

Die Erfindung bezieht sich auf eine Filtereinrichtung, insbesondere einen Gasfilter wie beispielsweise einen Luftfilter, nach dem Oberbegriff des Anspruches 1.

### Stand der Technik

In der DE 10 2009 008 450 A1 wird eine Filtereinrichtung beschrieben, die zur Filtration der Ansaugluft einer Brennkraftmaschine eingesetzt wird. Die Filtereinrichtung umfasst ein ringförmiges Filterelement in einem aufnehmenden Filtergehäuse. Das Filterelement weist einen Filtermediumkörper mit stirnseitigen Endscheiben und einem innen liegenden Mittelrohr als Stützgerüst auf. Einteilig mit einer Endscheibe ist ein Dichtungselement ausgebildet, das zwei axial überstehende Dichtwülste mit einem zwischenliegenden Einschnitt aufweist, in den ein Vorsprung an der Unterseite eines Gehäusebauteils einragt. In die Endscheibe ist eine Verstärkungsplatte integriert, welche von dem Dichtungsmaterial der Endscheibe vollständig umhüllt ist.

### Offenbarung der Erfindung

Der Erfindung liegt die Aufgabe zugrunde, eine Filtereinrichtung mit einem ringförmigen Filterelement mit einfachen konstruktiven Maßnahmen in der Weise auszubilden, dass über einen langen Betriebszeitraum im Bereich der Stirnseite Dichtigkeit zwischen Rohund Reinseite gewährleistet ist.

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung wird vorzugsweise zur Gasfiltration, insbesondere zur Filtration der Ansaugluft an Brennkraftmaschinen eingesetzt. Es sind aber auch Ausführungen zur Filtration flüssiger Medien möglich.

Die Filtereinrichtung weist ein ringförmiges Filterelement mit einem Filtermediumkörper auf, an dem die Filtration stattfindet. Der Filtermediumkörper wird in Radialrichtung von dem zu reinigenden Fluid durchströmt, vorzugsweise radial von außen nach innen, so dass der Innenraum, welcher vom Filtermediumkörper ringförmig umschlossen ist, den Reinraum bildet, aus dem das gereinigte Fluid axial ableitbar ist. Der Filtermediumkörper ist vorzugsweise als Faltenbalg ausgeführt, wobei an mindestens einer Stirnseite, vorzugsweise an beiden gegenüberliegenden Stirnseiten, am Filtermediumkörper eine dichtende Endscheibe angeordnet ist.

Im zusammengebauten Zustand liegt ein Gehäusebauteil der Filtereinrichtung, beispielsweise ein reinseitiger Fluidanschluss, an einem Dichtungselement an, das stirnseitig am Filterelement angeordnet ist. Das Dichtungselement weist zwei benachbarte Stützwände oder -wülste auf, zwischen denen ein Einschnitt liegt, in den eine Stützrippe an dem das Filterelement übergreifenden Gehäusebauteil einragt. Die Stützrippe befindet sich in einer Aufnahmenut an dem Gehäusebauteil, wobei die Aufnahmenut von zwei Seitenwänden des Gehäusebauteils begrenzt ist, die in Radialrichtung - bezogen auf die Längsachse des Filterelements - beabstandet zueinander angeordnet sind.

Die Stützwände des Dichtungselements bilden sowohl auf der dem zwischenliegenden Einschnitt zugewandten Seite als auch auf der dem Einschnitt abgewandten Seite jeweils eine Stützfläche, an der sich jeweils eine Seitenwand der Aufnahmenut bzw. die in der Aufnahmenut einragende Stützrippe in Radialrichtung abstützen. Es gibt somit insgesamt mindestens vier Stützflächen an dem Dichtungselement für das aufzusetzende Gehäusebauteil, wobei jede Stützfläche zugleich eine Dichtfläche ausbilden kann, so dass insgesamt eine hohe und dauerhafte Dichtigkeit zwischen Roh- und Reinseite an der Außenseite des Filterelements gewährleistet ist. Vorzugsweise sind mindestens zwei Dichtflächen vorhanden, welche durch die jeweils dem Einschnitt zugewandten Seiten der Stützwände und/oder die jeweils dem Einschnitt abgewandten Seiten der Stützwände ausgebildet sind, so dass jeweils eine Radialdichtung ausgebildet ist.

In einer Ausgestaltung liegen die jeweils dem Einschnitt zugewandten Seiten der Stützwände dichtend an der Stützrippe an. Alternativ oder zusätzlich liegen die jeweils dem Einschnitt abgewandten Seiten der Stützwände an den Seitenwänden der Aufnahmenut dichtend an.

Das erfindungsgemäße Stütz- und Dichtkonzept ist besonders für Filterelemente geeignet, welche einen ovalen bzw. stadionförmigen Querschnitt aufweisen. Der Einsatz bei Filtermediumkörpern mit kreisförmigem Querschnitt ist jedoch ebenfalls möglich. Die Faltkanten des Filtermediumkörpers können parallel zueinander verlaufen oder aufeinander zulaufen.

Das Gehäusebauteil stützt sich im Wesentlichen nur in Radialrichtung an den Stützflächen der Stützwände ab, wohingegen in Achsrichtung keine oder nur geringe Kräfte zwischen dem Gehäusebauteil und dem Dichtungselement wirksam sind. An den Stützwänden findet keine axiale Abstützung des aufzusetzenden Gehäusebauteils statt, so dass die Stützwände von entsprechend hohen Axialkräften entlastet sind und keine Gefahr einer Bauteilschädigung durch derartige Axialkräfte besteht.

Die Aufnahmenut umgreift beide Stützwände, so dass die Innenseiten der Seitenwände der Aufnahmenut an den Außenseiten der Stützwände anliegen und zusätzlich die in den Einschnitt einragende Stützrippe an beiden Innenseiten der Stützwände des Dichtungselements zur Anlage kommt. Die Stützwände liegen in radialer Richtung spielfrei in der Aufnahmenut, um einen entsprechenden Kontakt zwischen den Stützflächen an den Stützwänden und den Seitenwänden der Aufnahmenut bzw. der Stützrippe zu gewährleisten.

In einer vorteilhaften Ausführung liegt die Stirnseite einer Seitenwand, welche die Aufnahmenut begrenzt, an dem Dichtungselement an, jedoch mit Abstand zu den Stützwänden, wobei über diese Seitenwand der Aufnahmenut eine axiale Stützkraft zwischen dem aufzusetzenden Bauteil und dem Filterelement übertragen wird. Die räumliche sowie funktionale Trennung von radialer Abdichtung und axialer Abstützung gewährleistet die Dichtfunktion an den seitlichen Stützflächen der Stützwände und die axiale Abstützfunktion über die Stirnseite der Seitenwand der Aufnahmenut. Im Bereich des Dichtungselements liegt die Seitenwand der Aufnahmenut mit ihrer Stirnseite an einem radial verlaufenden Abschnitt des Dichtungselements an. Vorteilhafterweise dient die radial innen liegende Seitenwand der Aufnahmenut zur axialen Abstützung, wobei zusätzlich oder alternativ auch über die radial außen liegende Seitenwand der Aufnahmenut eine axiale Abstützung am Dichtungselement möglich ist.

Endscheibe und Dichtungselement können als separate Bauteile ausgeführt sein, wobei das Dichtungselement zweckmäßigerweise mit der Endscheibe verbunden ist oder auf Kontakt mit der Endscheibe liegt. Das Dichtungselement wird beispielsweise auf die Endscheibe aufgesetzt oder, in einer weiteren Ausführung, im Wege des Aufschäumens oder Spritzens bzw. Gießens auf der Endscheibe angebracht.

In einer alternativen Ausführung sind Endscheibe und Dichtungselement als ein gemeinsames Bauteil ausgebildet, das beispielsweise in einem gemeinsamen Gieß- oder Aufschäumprozess erzeugt wird.

Gemäß einer weiteren vorteilhaften Ausführung weist die Seitenwand der Aufnahmenut, über die die axiale Stützkraft zwischen dem Gehäusebauteil und dem Filterelement übertragen wird, eine größere axiale Erstreckung auf als die Stützrippe, die innerhalb der Aufnahmenut angeordnet ist und im zusammengebauten Zustand in den Einschnitt zwischen den Stützwänden des Dichtungselements eingreift. Die größere axiale Erstreckung der Aufnahmenut im Vergleich zur Stützrippe gewährleistet, dass die axiale Stützkraft vollständig oder größtenteils über die Aufnahmenut und nicht über die Stützrippe übertragen wird.

Gemäß einer weiteren zweckmäßigen Ausführung ist das Filterelement mit einem Mittelrohr an der Innenseite des Filtermediumkörpers versehen, das ein Stützgerüst bildet und aus Längs- und Umfangsstreben besteht, zwischen denen Öffnungen für die Durchströmung des zu filtrierenden Fluids gebildet sind. Das Mittelrohr ist mit einem Stützkragen verbunden, der Träger des Dichtungselements oder in dieses eingebettet ist. Der Stützkragen erstreckt sich vorteilhafterweise an der Stirnseite des Mittelrohrs radial nach außen und ist in der Lage, die Axialkräfte, die im Betrieb auf das Filterelement wirken, in das Mittelrohr einzuleiten. Hierdurch ist gewährleistet, dass das Dichtungselement, insbesondere im Bereich der Stützwände, wo auch die radiale Dichtwirkung erzeugt wird, und des zwischenliegenden Einschnitts, nicht durch die axialen Stützkräfte belastet oder verformt wird. Die Stützkräfte werden von dem Gehäusebauteil in den Stützkragen und von diesem weiter in das Mittelrohr geleitet.

Der Stützkragen ist vorzugsweise einteilig mit dem Mittelrohr ausgebildet. Mittelrohr und Stützkragen können als Kunststoff-Spritzgussbauteil ausgeführt sein. Des Weiteren kommt eine separate Ausführung des Stützkragens vom Mittelrohr in Betracht, wobei in diesem Fall der Stützkragen am Mittelrohr befestigt ist, um die Kräfte, welche in Achsrichtung wirken, in das Mittelrohr leiten zu können.

Das Dichtungselement umhüllt, gemäß einer weiteren vorteilhaften Ausführung, den Stützkragen zumindest teilweise, ggf. vollständig. Das Dichtungselement kann so ausgeführt sein, dass der Endbereich des Filtermediumkörpers, auf dem das Dichtungselement aufsitzt, an seiner radialen Innenseite und seiner radialen Außenseite vom Dichtungselement übergriffen wird. Der Stützkragen kann eine Gitterstruktur mit Gitteröffnungen aufweisen, die von dem Dichtmaterial des Dichtungselements ausgefüllt sind. Hierdurch entsteht eine feste Verbindung zwischen dem Stützkragen und dem Dichtungselement.

Gemäß einer weiteren zweckmäßigen Ausführung ist das Dichtungselement im Bereich der den Einschnitt begrenzenden Stützwände frei von Stützelementen. Die Stützwände werden in dieser Ausführung allein durch ihre Eigensteifigkeit in Position gehalten, was für die Dichtfunktion mit radialer Anlage zu den Seitenwänden der Aufnahmenut bzw. der Stützrippe am Gehäusebauteil ausreichend ist. Die in den Einschnitt zwischen den Stützwänden einragende Stützrippe einerseits und die an den Außenseiten der Stützwände anliegenden Seitenwände der Aufnahmenut andererseits stabilisieren das Dichtungselement mit den Stützwänden.

Der Stützkragen erstreckt sich in Radialrichtung zumindest bis zu der Position am Dichtungselement, an der die Seitenwand der Aufnahmenut mit ihrer Stirnseite am Dichtungselement für die axiale Abstützung anliegt. Es kann zweckmäßig sein, den Stützkragen in Radialrichtung noch weiter über die Position hinaus zu erstrecken, an der die Seitenwand der Aufnahmenut mit ihrer Stirnseite das Dichtungselement beaufschlagt, beispielsweise bis zur ersten Stützwand, bis zum Einschnitt oder bis zur zweiten Stützwand.

Gemäß noch einer weiteren zweckmäßigen Ausführung befinden sich sämtliche Stützwände des Dichtungselements radial außerhalb des Mittelrohrs. Die Stützwände sind insbesondere unmittelbar am Filtermediumkörper platziert.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig.1: in perspektivischer Darstellung ein ringförmiges Filterelement, das an der Innenseite des Filtermediumkörpers ein Mittelrohr aufweist, mit dem ein axial überragender Stützkragen einteilig ausgebildet ist,
- Fig. 2: eine Filtereinrichtung mit einem Filtergehäuse und dem Filterelement aus Fig. 1 während der Montage an einem Auslassstutzen ,
- Fig. 3: eine Fig. 2 entsprechende Darstellung, jedoch im montierten Zustand.

In den Figuren sind gleiche Bauteile mit gleichen Bezugszeichen versehen.

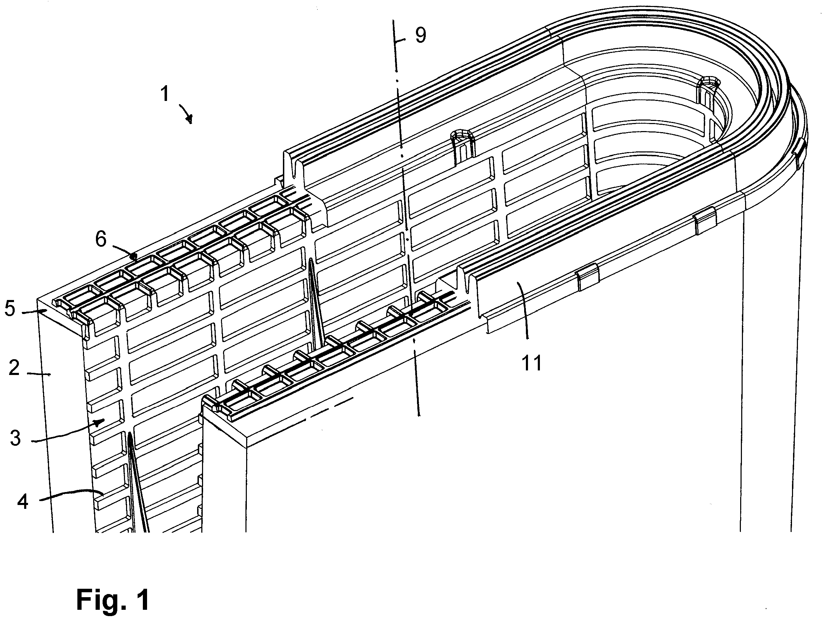

In Fig. 1 ist ein Filterelement 1 dargestellt, das zur Gasfiltration, beispielsweise für einen Luftfilter einer Brennkraftmaschine eingesetzt werden kann. Das Filterelement 1 ist ringförmig ausgebildet und besitzt im Ausführungsbeispiel einen stark lang gestreckten, ovalen Querschnitt mit Längsseiten, die geradlinig oder nur mit geringer Krümmung nach außen ausgebildet sind. Das Filterelement 1 weist einen ringförmig geschlossenen Filtermediumkörper 2 auf, an dem die Filtration des zu reinigenden Fluids stattfindet. Der Filtermediumkörper 2 wird radial von außen nach innen von dem Fluid durchströmt, so dass der Innenraum im Filtermediumkörper 2 die Reinseite bildet, aus der das gereinigte Fluid axial - in Richtung der Längsachse 9 des Filterelements 1 - abgeführt wird. Der Innenraum 3 ist von einem ein Stützgitter bildenden Mittelrohr 4 ausgekleidet, das an der Innenseite des Filtermediumkörpers 2 anliegt und vorzugsweise als Kunststoff-Spritzgussbauteil ausgeführt ist. Der Innenraum wird an der nicht dargestellten unteren Stirnseite durch eine geschlossene Endscheibe begrenzt, welche den Filtermediumkörper stirnseitig überdeckt.

Einteilig mit dem Mittelrohr 4 ist ein Stützkragen 6 ausgebildet, der sich in Radialrichtung erstreckt und an der Stirnseite des Mittelrohrs 9 radial nach außen gerichtet ist. Der Stützkragen 6 ist an der radial innen liegenden Seite - dem Innenraum 3 zugewandt - mit dem Mittelrohr 4 verbunden und ist insbesondere einteilig mit dem Mittelrohr 4 ausgebildet.

Der Stützkragen 6 ist mit einer Gitterstruktur versehen, die eine Vielzahl von Ausnehmungen aufweist. Diese Ausnehmungen im Stützkragen 6 dienen zur Aufnahme von Dichtungsmaterial eines Dichtungselements 11, das sich auf dem Stützkragen 6 befindet. Das Dichtungselement 11 wird auf den Stützkragen 6 aufgespritzt bzw. aufgeschäumt, das Dichtungsmaterial ist beispielsweise ein PU-Schaum. Indem das Dichtungsmaterial in die Ausnehmungen der Gitterstruktur des Stützkragens 6 eindringt, ist eine feste, unlösbare Verbindung zwischen dem Dichtungselement 11 und dem Stützkragen 6 gewährleistet. Der Stützkragen 6 ist vorteilhafterweise nach außen vollständig von dem Dichtungsmaterial des Dichtungselements 11 umhüllt.

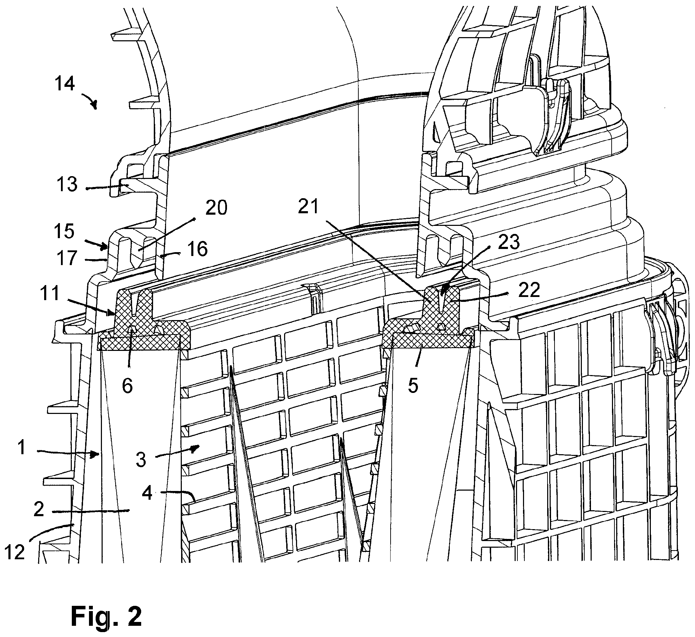

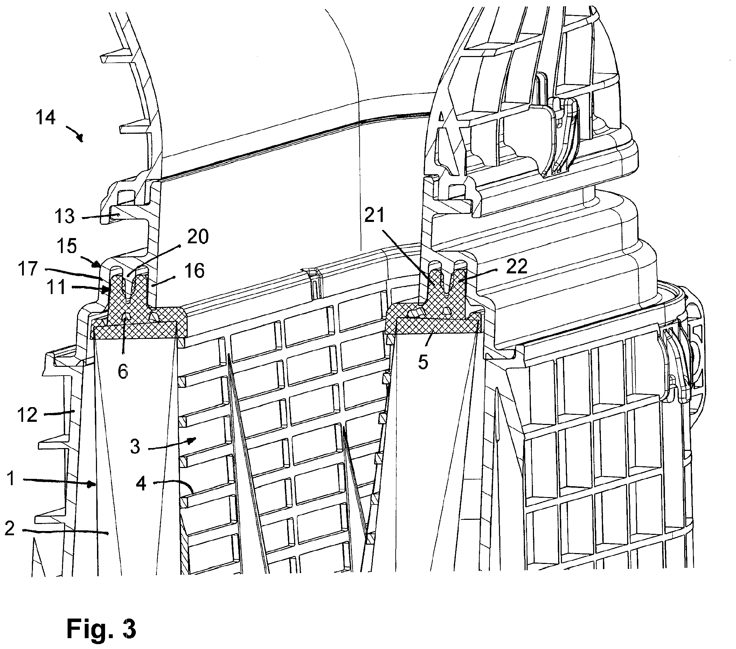

In den Fig. 2 und 3 ist eine Filtereinrichtung 14, insbesondere zur Gasfiltration, mit dem Filterelement 1 in einem Filtergehäuse dargestellt, das einen Auslassstutzen 13 für das gereinigte Gas und ein Filtergrundgehäuse 12 zur Aufnahme des Filterelements 1 umfasst, wobei das Filtergrundgehäuse 12 auf den Auslassstutzen 13 aufsetzbar und mit diesem verbindbar ist.. Zur Verdeutlichung sind in Fig. 2 die Bauelemente der Filtereinrichtung 14 teilweise in Explosionsdarstellung gezeigt, wohingegen Fig. 3 die eingebaute Position darstellt.

Das Dichtungselement 11 an dem Stützkragen 6 ist einteilig mit der Endscheibe 5 ausgebildet, welche einen Endbereich des Filtermediums des Filtermediumkörpers 2 stirnseitig überdeckt und radial innen und radial außen umgreift.

Auf der Unterseite des Auslassstutzens 13 befindet sich eine Aufnahmenut 15, die in Radialrichtung von Seitenwänden 16 und 17 begrenzt ist, welche radial auf Abstand und konzentrisch zueinander verlaufen. Am innen liegenden Boden der Aufnahmenut 15 ist eine Stützrippe 20 angeformt, die sich in Radialrichtung in der Mitte der Aufnahmenut befindet. Die axiale Erstreckung der Stützrippe 20 ist geringer als die axiale Erstreckung der die Aufnahmenut begrenzenden Seitenwände 16 und 17.

An dem Dichtungselement 11 sind zwei Stützwände 21 und 22 angeformt, zwischen denen sich ein Einschnitt 23 befindet (Fig. 2). Die beiden Stützwände 21 und 22 verlaufen konzentrisch und mit Abstand zueinander. Der Einschnitt 23 dient zur Aufnahme der Stützrippe 20 in der Aufnahmenut 15 am Auslassstutzen 13. Im montierten Zustand gemäß Fig. 3 liegen die Seitenwände 16 und 17 der Aufnahmenut 15 an den Außenseiten der Stützwände 21 und 22 an. Gemeinsam mit der in den Einschnitt 23 einragenden Stützrippe 20 ergeben sich hierdurch in Radialrichtung insgesamt vier Stützflächen zwischen dem Dichtungselement 11 und dem Gehäusebauteil 13, nämlich jeweils eine zwischen den Innenseiten der Seitenwände 16 und 17 und den Außenseiten der Stützwände 21 und 22 sowie jeweils eine zwischen den Seitenflächen der Stützrippe 20 und den Innenseiten der Stützwände 21 und 22. Der radiale Abstand zwischen den Seitenwänden 16 und 17 der Aufnahmenut 15 ist so konzipiert, dass gemeinsam mit der in den Einschnitt 23 einragenden Stützrippe 20, die die Stützwände 21 und 22 zumindest geringfügig radial nach außen drückt, eine spielfreie Aufnahme und Anlage in Radialrichtung zwischen den Stützwänden 21, 22 und den zugeordneten Flächen in der Aufnahmenut 15 gegeben ist. Mindestens zwei der vier Stützflächen zwischen dem Dichtungselement 11 und dem Gehäusebauteil 13 bilden gleichzeitig eine Dichtfläche und gewährleisten eine strömungsdichte Verbindung zwischen der Stirnseite des Filterelements und dem Auslassstutzen 13. Zur Ausbildung einer Dichtfläche liegt eine Seite des Dichtungselements 11 vorzugsweise vollflächig an einer Seitenwand 16 ,17 oder der Stützrippe 20 des Gehäusebauteils 13 an. Eine Seitenwand 16, 17 der Aufnahmenut oder eine Seite der Stützrippe 20 mit Stütz- jedoch ohne Dichtfunktion kann beispielsweise eine Verrippung aufweisen.

Im montierten Zustand gemäß Fig. 3 liegt die radial innen liegende Seitenwand 16 der Aufnahmenut 15 mit ihrer Stirnseite an dem radial bzw. horizontal verlaufenden Abschnitt des Dichtungselements 11 an. Über die Seitenwand 16 stützt sich der Auslassstutzen 13 axial an dem Dichtungselement 11 und damit an dem Filterelement 1 ab. Die Seitenwand 16 liegt unmittelbar an der außenliegenden Seite der Stützwand 21 an, wobei die Stirnseite der Seitenwand 16 nicht die Stützwand 21, sondern den horizontalen bzw. radial verlaufenden Abschnitt des Dichtungselements 11 beaufschlagt. Da in den radialen Abschnitt des Dichtungselements 11 der Stützkragen 6 integriert ist, wird die axiale Stützkraft auf den Stützkragen übergeleitet, der die Kraft in das Mittelrohr 4 weiterleitet. Hierdurch ist gewährleistet, dass die Stirnseite des Filtermediumkörpers 2 von den axialen Stützkräften entlastet ist. Auch die Stützwände 21 und 22 übernehmen keine axiale Stützfunktion, sondern lediglich eine abdichtende Funktion zu den Seitenwänden 16 und 17 am Auslassstutzen 13.

## Patentansprüche

1. Filtereinrichtung, insbesondere Gasfilter, beispielsweise Luftfilter, mit einem ringförmigen Filterelement (1), das einen Filtermediumkörper (2), der in Radialrichtung von dem zu reinigenden Fluid durchströmbar ist, aufweist, mit mindestens einem stirnseitig am Filtermediumkörper (2) angeordneten Dichtungselement (11) zur Abdichtung gegenüber einem Gehäusebauteil (13) eines das Filterelement (1) aufnehmenden Filtergehäuses, wobei das Dichtungselement (11) mindestens einen Einschnitt (23) aufweist, wobei eine Aufnahmenut (15) an dem Gehäusebauteil (13) das Dichtungselement (11) übergreift und eine Stützrippe (20) des Gehäusebauteils (13) in den Einschnitt (23) einragt, **dadurch gekennzeichnet, dass** das Dichtungselement (11) den Einschnitt (23) umfassende Stützwände (21, 22) aufweist, welche sowohl auf der dem Einschnitt (23) zugewandten als auch auf der dem Einschnitt (23) abgewandten Seite eine Stützfläche bilden, an der sich jeweils eine Seitenwand (16, 17) der Aufnahmenut (15) bzw. die Stützrippe (20) in Radialrichtung - bezogen auf die Längsachse (9) des Filterelements (1) - abstützen.

2. Filtereinrichtung nach Anspruch 1, **dadurch gekennzeichnet, dass** die Stirnseite einer Seitenwand (16) der Aufnahmenut (15) zur Übertragung einer axialen Stützkraft am Dichtungselement (11) anliegt.

3. Filtereinrichtung nach Anspruch 2, **dadurch gekennzeichnet, dass** die Seitenwand (16) der Aufnahmenut (15) eine größere axiale Erstreckung aufweist als die Stützrippe (20).

4. Filtereinrichtung nach Anspruch 2 oder 3, **dadurch gekennzeichnet, dass** die radial innen liegende Seitenwand (16) der Aufnahmenut (15) sich mit ihrer Stirnseite axial am Dichtungselement (11) abstützt.

5. Filtereinrichtung nach einem der Ansprüche 1 bis 4, **dadurch gekennzeichnet, dass** das Filterelement (1) ein Mittelrohr (4) an der Innenseite des Filtermediumkörpers (2) aufweist, wobei mit dem Mittelrohr (4) ein Stützkragen (6) verbunden ist, der mit dem Dichtungselement (11) verbunden, insbesondere in das Material des Dichtelements (11) eingebettet, ist.

6. Filtereinrichtung nach Anspruch 5, **dadurch gekennzeichnet, dass** sich der Stützkragen (6) vom Mittelrohr (4) ausgehend nach radial außen erstreckt.

7. Filtereinrichtung nach Anspruch 5 oder 6, **dadurch gekennzeichnet, dass** der Stützkragen (6) einteilig mit dem Mittelrohr (4) ausgebildet ist.

8. Filtereinrichtung nach einem der Ansprüche 5 bis 7, **dadurch gekennzeichnet, dass** das Dichtungselement (11) den Stützkragen (6) zumindest teilweise umhüllt.

9. Filtereinrichtung nach einem der Ansprüche 5 bis 8, **dadurch gekennzeichnet, dass** der Stützkragen (6) eine Gitterstruktur mit Gitteröffnungen aufweist.

10. Filtereinrichtung nach einem der Ansprüche 2 bis 9, **dadurch gekennzeichnet, dass** der Stützkragen (6) sich radial zumindest bis zu der Seitenwand (16, 17) der Aufnahmenut (15) erstreckt, die sich mit ihrer Stirnseite axial am Dichtungselement (11) abstützt.

11. Filtereinrichtung nach einem der Ansprüche 1 bis 10, **dadurch gekennzeichnet, dass** das Dichtungselement (11) im Bereich der den Einschnitt begrenzenden Stützwände (21, 22) frei von Stützelementen ist.

12. Filtereinrichtung nach einem der Ansprüche 1 bis 11, **dadurch gekennzeichnet, dass** alle Stützwände (21, 22) des Dichtungselements (11) radial außerhalb des Mittelrohrs (4) angeordnet sind.

13. Filtereinrichtung nach einem der Ansprüche 1 bis 11, **dadurch gekennzeichnet, dass** die jeweils dem Einschnitt (23) zugewandten Seiten der Stützwände (21, 22) dichtend an der Stützrippe (20) und/oder die jeweils dem Einschnitt (23) abgewandten Seiten der Stützwände (21, 22) an den Seitenwänden (16, 17) der Aufnahmenut (15) dichtend anliegen.

## Claims

1. Filtering device, in particular gas filter, for example air filter, having an annular filter element (1) which features a filter medium body (2) through which the fluid to be cleaned can flow in the radial direction, having at least one sealing element (11) disposed on the front face of the filter medium body (2) for sealing with respect to a housing component (13) of a filter housing accommodating the filter element (1), wherein the sealing element (11) features at least one notch (23), wherein a receiving groove (15) on the housing component (13) engages over the sealing element (11) and a supporting rib (20) of the housing component (13) projects into the notch (23), **characterized in that** the sealing element (11) features supporting walls (21, 22) surrounding the notch (23) which, both on the side facing the notch (23) and on the side facing away from the notch (23), form a supporting surface on which a side wall (16, 17) each of the receiving groove (15) or the support rib (20) rest in the radial direction - relative to the longitudinal axis (9) of the filter element (1).

2. Filtering device according to claim 1, **characterized in that** the front face of a side wall (16) of the receiving groove (15) rests against the sealing element (11) for transmitting an axial supporting force.

3. Filtering device according to claim 2, **characterized in that** the sidewall (16) of the receiving groove (15) features a greater axial extension than the supporting rib (20).

4. Filtering device according to claim 2 or 3, **characterized in that** the radially inner sidewall (16) of the receiving groove (15) is supported axially with its front face on the sealing element (11).

5. Filtering device according to one of the claims 1 to 4, **characterized in that** the filter element (1) features a central tube (4) on the interior side of the filter medium body (2), wherein a support collar (6) is connected to the central tube (4) which is connected to the sealing element (11), in particular embedded in the material of the sealing element (11).

6. Filtering device according to claim 5, **characterized in that** the support collar (6) extends radially outwards starting from the central tube (4).

7. Filtering device according to claim 5 or 6, **characterized in that** the support collar (6) is formed integrally with the central tube (4).

8. Filtering device according to one of claims 5 to 7, **characterized in that** the sealing element (11) envelops, at least partially, the support collar (6).

9. Filtering device according to one of claims 5 to 8, **characterized in that** the support collar (6) features a grid structure with grid openings.

10. Filtering device according to one of the claims 2 to 9, **characterized in that** the support collar (6) extends radially at least as far as the sidewall (16, 17) of the receiving groove (15) which is supported axially on the sealing element (11) by its front face.

11. Filtering device according to one of the claims 1 to 10, **characterized in that** the sealing element (11) is free of support members in the area of the supporting walls (21, 22) delimiting the notch.

12. Filtering device according to one of the claims 1 to 11, **characterized in that** all supporting walls (21, 22) of the sealing element (11) are disposed radially outside the central tube (4).

13. Filtering device according to one of the claims 1 to 11, **characterized in that** the sides of the supporting walls (21, 22) facing each the notch (23) rest sealingly against the supporting rib (20) and/or that the sides of the supporting walls (21, 22) facing each away from the notch (23) rest sealingly against the side walls (16, 17) of the receiving groove (15).

## Revendications

1. Dispositif de filtration, notamment filtre à gaz, par exemple filtre à air, comportant un élément filtrant (1) annulaire présentant un corps de milieu filtrant (2) qui peut être parcouru en sens radial par le fluide à filtrer, comportant au moins un élément d'étanchéité (11) disposé sur la face frontale du corps de milieu filtrant (2) et destiné à étancher par rapport à un composant de boîtier (13) d'un boîtier de filtre qui réceptionne l'élément filtrant (1), l'élément d'étanchéité (11) comportant au moins une entaille (23), une rainure de réception (15) chevauchant l'élément d'étanchéité (11) sur le composant de boîtier (13) et une nervure d'appui (20) du composant de boîtier (13) pénétrant dans l'entaille (23), **caractérisé en ce que** l'élément d'étanchéité (11) présente des parois d'appui (21, 22) qui entourent l'entaille (23) et qui forment, aussi bien du côté dirigé vers l'entaille (23) que de celui dirigé à l'opposé de l'entaille (23), une surface d'appui sur laquelle s'appuient respectivement une paroi latérale (16, 17) de la rainure de réception (15) et/ou la nervure d'appui (20) en sens radial - considéré par rapport à l'axe longitudinal (9) de l'élément filtrant (1).

2. Dispositif de filtration selon la revendication 1, **caractérisé en ce que** la face frontale d'une paroi latérale (16) de la rainure de réception (15) touche l'élément d'étanchéité (11) en vue de transférer une force d'appui axiale.

3. Dispositif de filtration selon la revendication 2, **caractérisé en ce que** la paroi latérale (16) de la rainure de réception (15) présente une longueur axiale supérieure à la nervure d'appui (20).

4. Dispositif de filtration selon la revendication 2 ou 3, **caractérisé en ce que** la paroi latérale (16) intérieure en sens radial de la rainure de réception (15) s'appuie avec sa face frontale en sens axial sur l'élément d'étanchéité (11).

5. Dispositif de filtration selon l'une des revendications 1 à 4, **caractérisé en ce que** l'élément filtrant (1) présente un tube central (4) sur la face intérieure du corps de milieu filtrant (2), un collet d'appui (6) étant relié au tube central (4) et qui est relié à l'élément d'étanchéité (11), notamment incorporé dans le matériau de l'élément d'étanchéité (11).

6. Dispositif de filtration selon la revendication 5, **caractérisé en ce que** le collet d'appui (6) s'étend de manière radiale vers l'extérieur à partir du tube central (4).

7. Dispositif de filtration selon la revendication 5 ou 6, **caractérisé en ce que** le collet d'appui (6) est formé en une seule pièce avec le tube central (4).

8. Dispositif de filtration selon l'une des revendications 5 à 7, **caractérisé en ce que** l'élément d'étanchéité (11) enrobe, au moins en partie, le collet d'appui (6).

9. Dispositif de filtration selon l'une des revendications 5 à 8, **caractérisé en ce que** le collet d'appui (6) présente une structure réticulaire avec un grillage.

10. Dispositif de filtration selon l'une des revendications 2 à 9, **caractérisé en ce que** le collet d'appui (6) s'étend en sens radial au moins jusqu'à la paroi latérale (16, 17) de la rainure de réception (15) dont la face frontale s'appuie en sens axial sur l'élément d'étanchéité (11).

11. Dispositif de filtration selon l'une des revendications 1 à 10, **caractérisé en ce que** l'élément d'étanchéité (11) est exempt d'éléments d'appui dans la zone des parois d'appui (21, 22) limitant l'entaille.

12. Dispositif de filtration selon l'une des revendications 1 à 11, **caractérisé en ce que** toutes les parois d'appui (21, 22) de l'élément d'étanchéité (11) sont disposées en sens radial à l'extérieur du tube central (4).

13. Dispositif de filtration selon l'une des revendications 1 à 11, **caractérisé en ce que** les côtés dirigés vers l'entaille (23) des parois d'appui (21, 22) sont en contact de manière étanche avec la nervure d'appui (20) et/ou que les côtés dirigés à l'opposé de l'entaille (23) des parois d'appui (21, 22) sont en contact de manière étanche avec les parois latérales (16, 17) de la rainure de réception (15).
